# EUROPÄISCHE PATENTANMELDUNG

(11) **EP 1 734 301 A1**
(43) Veröffentlichungstag der Anmeldung: **20.12.2006**
(21) Anmeldenummer: 06012329.6
(22) Anmeldetag: 14.06.2006
(51) Int. Cl.: F21V 7/00, C23C 14/00, G02B 5/00, C23C 28/00

(54) **Metallreflektor und Verfahren zu dessen Herstellung**

(30) Priorität: 17.06.2005 DE 102005028456
(71) Anmelder: Schott AG, 55122 Mainz (DE)
(72) Erfinder: Küpper, Thomas, 37581 Bad Gandersheim (DE); Zogg, Lutz, 37581 Bad Gandersheim (DE); Mehrtens, Andree, 31073 Grünenplan (DE)
(74) Vertreter: Herden, Andreas F.

(57) **Zusammenfassung**

Die Erfindung betrifft ein Verfahren zur Herstellung eines hochpräzisen Reflektors und dessen Beschichtung. Es wird ein Reflektor aus einem Vollmaterial mit einem materialabtragenden Verfahren hergestellt und mit einer Kaltlichtspiegelschicht beschichtet.

## Beschreibung

Die Erfindung betrifft ein Verfahren zur Herstellung eines hochpräzisen Metallreflektors sowie einen Metallreflektor. Weiter ist ein Projektionssystem Gegenstand der Erfindung.

Reflektoren finden in der Praxis eine Vielzahl von Anwendungen, insbesondere sei hingewiesen auf Scheinwerferreflektoren, insbesondere im Automobilbereich sowie auf Reflektoren wie sie für Projektionssysteme beispielsweise digitale Projektoren eingesetzt werden.

Die DE 100 29 905 zeigt einen Reflektor für ein Kraftfahrzeug, bei dem mittels eines Abscheideverfahrens eine Kaltlichtbeschichtung aufgebracht ist. Der Reflektor weist einen Grundkörper aus Kunststoff auf.

Derartige Kunststoffreflektoren haben den Nachteil, dass sie nicht besonders temperaturbeständig sind. Insbesondere wenn der Reflektor mit einer sogenannten Kaltlichtspiegelbeschichtung, also einer Infrarotstrahlung durchlässigen und zum Teil absorbierenden Schicht versehen ist, kommt es insbesondere bei Hochleistungsprojektionsanlagen zu starken thermischen Belastungen.

Tiefgezogene Metallreflektoren, die ebenfalls in der Praxis häufig verwendet werden, haben oft nicht die geforderte Präzision. Darüber hinaus sind diese Reflektoren relativ dünn. Aufgrund dieses geringen Materialvolumens ist es schwierig, insbesondere in einem Projektionssystem, die Wärme hinreichend abzuführen, so dass der Reflektor sehr hohe Temperaturen erreicht.

Die US 3 944 320 zeigt einen Kaltlichtspiegel mit einer emaillierten Beschichtung. Nachteilig an solch emaillierten Beschichtungen ist insbesondere, dass keine sehr hohe Präzision eingehalten werden kann, was die optische Güte eines Projektionssystems verschlechtert. Darüber hinaus ist die Emailleschicht recht temperaturempfindlich, so dass ein solcher Spiegel nicht für Hochleistungsprojektoren verwendet werden kann.

Um gute optische Eigenschaften zu erreichen, verwendet man für Hochleistungsprojektoren in erster Linie Reflektoren mit einem Grundkörper aus Glas. Solche Reflektoren zeichnen sich durch eine relativ hohe Präzision aus. Nachteilig ist allerdings, dass Glas ein relativ schlechter Wärmeleiter ist, so dass insbesondere bei Hochleistungsprojektoren die Wärme nur schlecht abgeführt werden kann, was zu hohen Temperaturen, insbesondere an der Reflektoroberfläche führt. Dies gilt in besonderem Maße, wenn der Reflektor eine Kaltlichtspiegelbeschichtung, also eine bevorzugt Infrarot-Strahlung durchlässige und in zumindest einem Teilbereich des sichtbaren Spektrums reflektierende Schicht aufweist. Da ein gewisser Anteil der durch den Glaskörper hindurch gehenden Infrarotstrahlung von diesem absorbiert wird, führt dieses zu einer deutlichen Erwärmung des Glaskörpers. Daher haben Glasreflektoren bei Hochleistungsprojektionsanlagen meist nur eine begrenzte Lebensdauer.

Der Erfindung liegt demgegenüber die Aufgabe zugrunde, einen Reflektor mit guten optischen Eigenschaften zu schaffen. Weiter ist Aufgabe der Erfindung, einen Reflektor bereitzustellen, der unempfindlich gegenüber hohen Temperaturen ist und es ermöglicht, entstehende Wärme gut abzuführen. Aufgabe der Erfindung ist auch eine Kombination aus Metallreflektor und Kaltlichtspiegelbeschichtung bereitzustellen, die eine hohe optische Güte hat und mit großer Präzision herstellbar ist. Weiter ist Aufgabe der Erfindung, ein Projektionssystem mit guten optischen Eigenschaften und einer hohen Wärmeabfuhr bereitzustellen. Auch soll ermöglicht werden, ein Hochleistungsprojektionssystem mit einem leicht austauschbaren Reflektor bereitzustellen.

Die Aufgabe der Erfindung wird durch ein Verfahren zur Herstellung eines hochpräzisen Reflektors, durch einen Reflektor mit einer reflektierenden Innen- und einer Außenseite sowie durch ein Verfahren zur Beschichtung eines Metallreflektors und ein Projektionssystem gemäß einem der unabhängigen Ansprüche erreicht.

Bevorzugte Ausführungsformen und Weiterbildungen der Erfindung sind den jeweiligen Unteransprüchen zu entnehmen.

Gemäß der Erfindung ist vorgesehen, einen hochpräzisen Reflektor herzustellen, indem zunächst ein Vollkörper aus Metall bereitgestellt wird und sodann die Reflektorgeometrie mit einem materialabtragenden Fertigungsverfahren erzeugt wird. So ist es möglich, dickwandige Metallreflektoren mit hoher Präzision herzustellen. Im Gegensatz dazu bestehen tiefgezogene Metallreflektoren aus dünnem Material. Hierbei lässt sich beim Tiefziehvorgang die Geometrie bei weitem nicht so präzise einstellen, wie bei Anwendung eines materialabtragenden Fertigungsverfahrens.

Der bereitgestellte Körper aus Vollmaterial kann eine beliebige Geometrie haben, beispielsweise ist denkbar, den Reflektor aus einem quaderförmigen Stahlblock oder aus einem Rundmaterial herzustellen. Es ist aber auch denkbar als Halbzeug eine Form bereitzustellen, die schon in Grundzügen der Geometrie eines Reflektors entspricht, so dass weniger Material abgetragen werden muss.

Es hat sich überraschenderweise herausgestellt, dass die so hergestellten Metallreflektoren eine ähnliche Präzision wie Glasreflektoren aufweisen, ähnlich optisch gute Eigenschaften haben können und darüber hinaus noch wesentlich billiger herzustellen sind als entsprechende Hochpräzisionsglasreflektoren.

Mit materialabtragenden Fertigungsverfahren ist es zudem möglich, beliebige Reflektorgeometrien zu erzeugen, die nicht nur eine parabolische oder elliptische Form sondern auch beliebige Facettenformen umfassen.

Die erfindungsgemäß hergestellten Metallreflektoren zeichnen sich zudem durch eine hohe Temperaturbeständigkeit und vor allem dadurch aus, dass die Wärme besonders gut abgeführt werden kann, da dickwandige Reflektorgeometrien möglich sind.

Bei einer bevorzugten Ausführungsform des Verfahrens wird ein spanabhebendes Verfahren vorgenommen, insbesondere die Reflektorgeometrie gedreht oder gefräst. Solche Verfahren sind in der Praxis gängig und lassen sich beispielsweise mit diamantbestückten Werkzeugen in sehr hoher Präzision durchführen.

Insbesondere wenn kompliziertere Geometrien erzeugt werden sollen, bietet sich an, zumindest Teile der Reflektorgeometrie durch ein Elektroerodierverfahren zu erzeugen. Insbesondere schmale Kanäle lassen sich häufig nur mit derartigen Fertigungsverfahren realisieren.

Bevorzugterweise wird die Reflektoroberfläche, also die reflektierende Fläche auf der Vorderseite des Reflektors, oberflächenbehandelt, insbesondere geläppt, geschliffen oder poliert, um eine geringe Rauhigkeit und hohe Passgenauigkeit zu erzeugen.

Bei einer bevorzugten Ausführungsform des Verfahrens wird eine parabolische oder elliptische Reflektorgeometrie erzeugt, aber auch beliebige andere Geometrien wie eine Facettengeometrie ist denkbar.

Bei einer Weiterbildung der Erfindung wird auf der Rückseite des Reflektors, also der Seite, die der reflektierenden Seite abgewandt ist, ebenfalls mittels eines materialabtragenden Verfahrens eine Struktur erzeugt.

Insbesondere ist durch das erfindungsgemäße Verfahren möglich, die Rückseite mit einem Gewinde mit Kühlrippen oder mit Pass- oder Zentrierungsmitteln zu versehen. So kann ein einstückiger Reflektor bereitgestellt werden, der auf der Rückseite Funktionselemente, wie Zentrierstifte, Gewinde etc. aufweist.

Dabei ist insbesondere von Vorteil, dass der Reflektorgrundkörper im Wesentlichen aus einem Metall, insbesondere Edelstahl, Aluminium, Kupfer oder Silber besteht. Anders als Glas neigen diese Materialien nicht zum spröden Brechen, so dass auch komplizierte Geometrien oder Kühlkanäle möglich sind. Bevorzugt sind insbesondere Metalle mit hoher Wärmeleitfähigkeit wie bestimmte Stahllegierungen, Aluminiumkupfer oder Silber,

Bei einer Weiterbildung der Erfindung wird der Reflektor auf der Vorderseite mit einer Reflexionsschicht, insbesondere mit einer Aluminium und Silber umfassenden Schicht beschichtet. Derartige Schichten, die den Reflexionsgrad einer Oberfläche erhöhen, sind allgemein bekannt.

Insbesondere ist auch vorgesehen, den metallischen Reflektor mit einer geeigneten Kaltlichtspiegelschicht zu beschichten. Dabei handelt es sich um dem Fachmann bekannte Infrarotlicht-absorbierende und das sichtbare Licht in zumindest einem Teilbereich des sichtbaren Spektrums reflektierende Beschichtungen, die aus dem metallischen Reflektor einen Kaltlichtspiegel machen. Dabei kommt dem erfindungsgemäßen Reflektor vor allem zugute, dass er eine hohe Wärmeabfuhr ermöglicht, da eine solche Beschichtung zu einer stark erhöhten thermischen Belastung des Reflektors führt.

Insbesondere ist vorgesehen, eine optische Funktionsschicht, zu der gemäß der Anmeldung auch die Kaltlichtspiegelschicht gezählt wird, mittels eines PVD (Physical Vapor Deposition)- oder eines CVD (Chemical Vapor Deposition)-Verfahrens aufzubringen. Derart aufgebrachte Schichten zeichnen sich durch eine hohe Maßhaltigkeit aus, gehen eine gute Verbindung mit dem Substrat ein und können in dünnen Schichtdicken aufgebracht werden.

Insbesondere ist vorteilhaft, wenn zumindest zwei Schichten in einer Anlage, beispielsweise einer Vakuumanlage aufgebracht werden. Dabei ist insbesondere daran gedacht, dass zunächst eine Reflexionsschicht und sodann eine Kaltlichtspiegelschicht aufgebracht wird. Darüber hinaus bietet sich noch an, den Reflektor mit einer transparenten Antikratzschicht oder einer selbstreinigenden Schicht zu versehen. Werden die Schichten bevorzugterweise in einer Anlage aufgebracht, kann der gesamte Beschichtungsvorgang in einem Arbeitsgang durchgeführt werden.

Die Erfindung betrifft weiter einen Reflektor mit einer reflektierenden Innenseite und einer Außenseite, der ein Metallsubstrat und zumindest eine mittels eines PVD- oder CVD-Verfahrens abgeschiedene Beschichtung aufweist.

Die Erfinder haben herausgefunden, dass bisher für die Beschichtung von Kunststoff oder Glas entwickelte PVD- und CVD-Verfahren sich grundsätzlich bei Anpassung der entsprechenden Prozessparameter auch für die Beschichtung von Metallreflektoren eignen. Insbesondere ermöglicht ein solcher Metallreflektor mit einer abgeschiedenen Beschichtung, insbesondere einer Reflexbeschichtung, ähnlich gute optische Eigenschaften wie ein Glasreflektor bei einer wesentlich verbesserten Wärmeabfuhr und erhöhter Lebensdauer.

Zur Verbesserung der Wärmeabfuhr ist vorgesehen, an der Reflektoraußenseite Kühlrippen anzuordnen. Alternativ oder kumulativ dazu kann der Reflektor auch Kühlkanäle für den Anschluss an einen externen Kühlkreislauf aufweisen. So ist es möglich, den Reflektor direkt zu kühlen und die Wärme über einen externen Kühler abzuführen. Insbesondere ist vorgesehen, zumindest einen Flansch zum Anschluss an einen externen Kühlmittelkreislauf bereitzustellen. Dabei ist wesentlich, dass der Reflektorgrundkörper im Wesentlichen aus Metall besteht. Präzise Gewinde und Kühlkanäle lassen sich in Glas nur sehr schwer anbringen.

Bei eine Weiterbildung der Erfindung weist der Reflektor einen zumindest teilweise mit einem Kühlmittel gefüllten Hohlraum auf. In diesem Hohlraum, in dem sich beispielsweise auch Kühlrippen befinden können, kann ein Kühlmittel zirkulieren und so alleine über eine Konvektion den Reflektor kühlen. So ist sogar denkbar, selbst für Hochleistungsprojektoren Reflektoren bereitzustellen, die ohne eine Zwangsbelüftung auskommen. Selbst Ventilatoren-betriebene Zwangsbelüftungen bei Hochleistungsprojektionssystemen haben den Nachteil, dass sie relativ laut sind. Dies ist insbesondere für Beamer zur Filmprojektion äußerst nachteilig.

Bei einer Weiterbildung der Erfindung wird ein Kühlmittel eingefüllt, das in etwa bei Betriebstemperatur einen Phasenübergang macht. Beispielsweise ist denkbar, den Hohlraum des Reflektors nur teilweise mit einem solchen Kühlmittel zu füllen, welches durch Kondensation und Übergang in den gasförmigen Zustand eine höhere Kühlleistung ermöglicht.

Bei einer Weiterbildung der Erfindung weist der Reflektor zumindest auf seiner Rückseite Passmittel auf. Unter Passmittel wird jede dem Fachmann bekannte Vorrichtung verstanden, die es ermöglicht, den Reflektor in einer entsprechenden Halterung definiert einzusetzen. Als Passmittel können Stifte, ein Nut- und Federsytem oder auch ein Konus sowie weitere dem Fachmann bekannte Mittel verwendet werden. Hier kommt ebenfalls dem erfindungsgemäßen Reflektor zugute, dass an ein Metallsubstrat mit hoher Präzision solche Passmittel anbringbar oder einbringbar sind, die es dann ermöglichen, den Reflektor exakt definiert einzusetzen. So ist es möglich, ein Projektionssystem bereitzustellen, bei dem der Reflektor leicht austauschbar ist und nicht nach dem Austausch justiert werden muss.

Insbesondere wenn es sich um einen Reflektor für einen Projektor handelt, ist es von Vorteil, wenn dieser auf der Innenseite eine bevorzugt Infrarotabstrahlung absorbierende Beschichtung aufweist, also als Kaltlichtspiegel ausgestaltet ist.

Eine derartige Infrarot-absorbierende Schicht kann beispielsweise eine Schwarzschicht umfassen, die nicht nur im Infraroten, sondern auch im sichtbaren Spektralbereich absorbiert. Diese können beispielsweise durch Dampfphasenabscheidung aufgebracht werden. Als geeignet haben sich dazu unter anderem TiCN, WCH und AlTiN-Schichten erwiesen. Eine gute thermische Belastbarkeit weisen insbesondere absorbierende Email-Schichten auf. Noch eine Möglichkeit ist, eine Schwarzschicht galvanisch oder durch chemische Reaktion mit dem Substratmaterial herzustellen. Auf diese Weise wird eine absorbierende Eloxal-Schicht erzeugt. Schließlich können auch Schwarzchrom und/oder Schwarznickel-Schichten aufgebracht werden, wozu sich ebenfalls eine galvanische Abscheidung eignet. Derartige Schichten weisen sehr gute Absorbtionseigenschaften über einen weiten Wellenlängenbereich auf.

Um gute Kaltlichteigenschaften in Verbindung mit einem auf der Schwarzschicht aufgebrachten Interferenzschichtsystem zu erreichen, weist gemäß einer Weiterbildung der Erfindung eine zumindest auf der Reflektorinnenseite angeordnete Schwarzschicht im sichtbaren und insbesondere auch im Infrarotbereich bis 1800 Nanometern Wellenlänge eine Absorption von zumindest 80%, bevorzugt bis 2400 Nanometern Wellenlänge eine Absorption von zumindest 75% auf.

Vorteilhafterweise hat die reflektierende Innenseite des Reflektors einen Mittenrauhwert Rₐ von unter 200 nm, bevorzugt von unter 50 nm und besonders bevorzugt von unter 20 nm. Solche glatten Strukturen zeichnen sich durch ein hohes Reflexionsvermögen aus.

Bei einer bevorzugten Ausführungsform des Reflektors liegt zumindest auf der Innenseite die Toleranzfeldbreite unter 200 µm, bevorzugt unter 50 µm und besonders bevorzugt unter 10 µm. Es ist mit einem Metallreflektor möglich, ein hochpräzises Bauteil bereitzustellen, welches nur äußerst geringe Abweichungen vom Sollmaß aufweist.

Bei einer bevorzugten Ausführungsform des Reflektors weist dieser zumindest auf der reflektierenden Innenseite eine Materialdicke über 0,3 mm, bevorzugt über 0,8 mm und besonders bevorzugt über 1,5 mm auf. Es ist somit vorgesehen, dass zumindest die Reflektorschale eine relativ dickwandige Metallstruktur darstellt, die eine besonders gute Wärmeabfuhr ermöglicht. Dies ist bei tiefgezogenen Metallreflektoren nicht möglich, da sich Tiefziehverfahren nur für dünnwandige Bleche eignen.

Bei einer bevorzugten Ausführungsform ist der Reflektor einstückig ausgebildet. Im Sinne der Erfindung wird unter Reflektor das gesamte Bauteil verstanden, welches wie ebenfalls als Gegenstand der Erfindung beschrieben, auch Kühlkanäle, Kühlrippen oder ähnliches aufweist.

Bei einer Weiterbildung der Erfindung weist der Reflektor zumindest auf der Rückseite Einsenkungen mit im Wesentlichen muldenförmigem Querschnitt auf. Solche auch als Dellen oder Dimpel bekannte Einsenkungen führen in besonders bevorzugter Weise dazu, dass wenn ein Fluid an dem Reflektor vorbei strömt, sich Wirbel beziehungsweise tornadoartige Strukturen bilden, was die Wärmeabfuhr erheblich verbessern kann.

Gegenstand der Erfindung ist weiter ein Verfahren zur Beschichtung eines Metallreflektors. Dabei wird ein Metallumfassendes Reflektorsubstrat bereitgestellt und eine Funktionsschicht, insbesondere eine Absorptionsschicht und/oder eine Reflexionsschicht auf der Oberfläche des Reflektorsubstrates abgeschieden. Unter Absorptionsschicht wird eine Schicht verstanden, die zumindest in einem Teilbereich des Wellenspektrums absorbierende Eigenschaften aufweist. Die Reflexionsschicht weist reflektierende Eigenschaften zumindest in einem Teilbereich des sichtbaren Wellenspektrums auf. Durch ein Abscheideverfahren, insbesondere ein chemisches oder physikalisches Abscheideverfahren lassen sich Schichten mit sehr hoher Präzision erzeugen.

Es ist vorgesehen als Reflektorsubstrat entweder ein aus einem Vollmaterial durch ein materialabtragendes Fertigungsverfahren hergestelltes Substrat oder einen tiefgezogenen Metallgrundkörper zu verwenden.

Insbesondere ist vorgesehen, einen Kaltlichtmetallreflektor bereitzustellen, der eine Kaltlichtspiegelbeschichtung aufweist, die mittels eines Abscheideverfahrens aufgebracht wurde.

Derartige Schichten lassen sich insbesondere durch das Abscheiden einer Metallschicht und anschließendes Oxidieren sowie das Abscheiden von Oxid- und Nitritschichten erreichen.

Insbesondere ist vorgesehen, zunächst eine Reflexionsschicht, insbesondere eine Aluminium- oder Silberschicht zur Erhöhung des Reflexionsvermögens der Oberfläche des metallischen Reflektors abzuscheiden, da viele metallische Werkstoffe, insbesondere Werkzeugstähle, von sich aus nur ein geringeres Maß an Reflexion im sichtbaren Bereich aufweisen.

Sodann ist vorgesehen, eine transparente Wechselschicht aus hoch- und niedrigbrechenden Teilschichten, wie beispielsweise Siliziumoxid und Titanoxid als Kaltlichtspiegelschicht aufzubringen. Unter transparent im Sinne der Anmeldung wird dabei eine Schicht verstanden, die zumindest in einem Teilbereich des sichtbaren Wellenspektrums transparente Eigenschaften aufweist. Insbesondere ist in dem Wechselschichtsystem auch mindestens eine Chromoxidschicht zur teilweisen Absorption der Infrarot-Strahlung vorgesehen.

Vorteilhafte dem Fachmann bekannte Abscheideverfahren sind PVD-Verfahren wie Sputter- und Aufdampfverfahren sowie Elektronenstrahlverdampfung oder CVD-Verfahren, insbesondere Plasma-unterstütze CVD-Verfahren.

Bei einer Weiterbildung des Verfahrens ist insbesondere bei einem tiefgezogenen Metallreflektor vorgesehen, auf der Rückseite Kühlrippen anzuschweißen, anzulöten oder anzukleben. Insbesondere bei dünnwandigen tiefgezogenen Metallreflektoren ist die Wärmeabfuhr häufig nur unzureichend. Gemäß der Erfindung ist daher vorgesehen, Kühlrippen auf die Reflektorrückseite anzulöten.

Bei einer besonderen Ausführungsform ist vorgesehen, parallel zur Reflektorachse Finnen anzuordnen. Unter Finnen werden im Wesentlichen nach hinten spitz zulaufende Bleche verstanden.

Bei einer Weiterbildung der Erfindung ist vorgesehen, die Finnen gleichzeitig mit Zentrierungsmitteln zu versehen, insbesondere am Ende der Finnen Passstifte anzubringen, mittels derer der Reflektor passgenau in eine entsprechende Halterung eingesetzt werden kann.

Weiter Gegenstand der Erfindung ist ein Projektionssystem, umfassend einen Metallreflektor und eine Halterung für den Metallreflektor, wobei Passmittel zwischen Reflektor und Halterung vorgesehen sind.

Unter Metallreflektor wird im Sinne der Anmeldung ein Reflektor verstanden, der im Wesentlichen Metall aufweist, also insbesondere ein erfindungsgemäßer Reflektor mit einem Metallsubstrat. Mittels der Passmittel, bei denen es sich insbesondere um Passstifte, ein Nut- und Federsystem oder einen Konus handelt, ist es möglich, den Reflektor passgenau in eine Halterung zu verankern. So ist es möglich, ein Projektionssystem mit Reflektor und Halterung bereitzustellen, welches es ermöglicht, den Reflektor auszutauschen, ohne danach eine Justierung vornehmen zu müssen. In vorteilhafter Weise wird insbesondere ein aus einem Vollmaterial hergestellter Reflektor verwendet, bei dem die Passmittel Teil der Rückseitenstruktur sein können. Dabei kommt dem Projektionssystem zugute, dass ein solcher Metallreflektor mit hoher Maßhaltigkeit herstellbar ist und mechanische Funktionselemente wie Stifte und Schrauben sich besonders gut aus einem Metallvollmaterial bilden lassen.

Bei einer Weiterbildung der Erfindung ist beim Projektionssystem zwischen Reflektor und Halterung eine Wärmeleitpaste angeordnet. So wird die Wärmeableitung vom Reflektor zur Halterung weiter verbessert.

Bei einer Weiterbildung der Erfindung sind Reflektor und Halterung mittels eines einrastbaren Systems, insbesondere mittels eines Bajonettverschlusses miteinander verbindbar. Insbesondere ist vorgesehen, dass der Reflektor in der Halterung einrastbar ist und so leicht eingesetzt und entnommen werden kann.

Gemäß der Erfindung kann die Kühlung des Reflektors, der insbesondere eine Kaltlichtspiegelbeschichtung aufweist, auch über die Halterung erfolgen. Es ist auch vorgesehen, zwischen Reflektor und Halterung ein Kühlmittel hindurchzuführen. Dabei kann es sich um ein beliebiges Fluid, also auch um Luft handeln. Soll die Wärme auch über die Halterung abgeführt werden, ist es zweckmäßig, für die Halterung ebenfalls ein Material mit guter Wärmeleitfähigkeit, insbesondere ein Metall zu verwenden. Auch kann man an der Halterung Kühlrippen anbringen. So ist es möglich ein Projektionssystem bereitzustellen, bei dem keine motorisch betriebenen Ventilatoren verwendet werden müssen. Die Wärme kann alleine über Strahlung und Konvektion abgeführt werden.

Vorteilhafterweise befindet sich vor dem Reflektor eine transparente Scheibe oder Linse zum Schutz oder zur Erzielung von weiteren optischen Funktionen.

Bei einer Weiterbildung der Erfindung wird eine Scheibe verwendet, die bevorzugt im Infrarotbereich Licht reflektiert und somit verhindert, dass Wärmestrahlung nach außen dringt. Ermöglicht wird eine solche Konstruktion insbesondere durch die Eigenschaft eines erfindungsgemäßen Metallreflektors, um die Wärme schnell abzuführen.

Die Erfindung soll im Folgenden anhand der Zeichnungen Figur 1 bis Figur 10 näher erläutert werden.
- Fig. 1a: zeigt eine schematische Schnittansicht eines erfindungsgemäßen Reflektors mit einer reflektierenden Aluminium- oder Silberschicht und einer darauf befindlichen Schutzschicht, z.B. aus SiO2,
- Fig. 1b: zeigt eine schematische Schnittansicht eines erfindungsgemäßen Reflektors mit einer reflektierenden Aluminium- oder Silberschicht und einem darauf befindlichen Wechselschichtsystem aus SiO2- und TiO2-Schichten zur Erhöhung der Reflexion im sichtbaren Bereiches des Spektrums,
- Fig. 1c: zeigt eine schematische Schnittansicht eines erfindungsgemäßen Reflektors mit einer reflektierenden Aluminium- oder Silberschicht und einer darauf befindlichen Kaltlichtspiegelbeschichtung, bestehend aus einer Chromoxidschicht und einem darauf befindlichen Wechselschichtsystem aus SiO2- und TiO2-Schichten,
- Fig. 1d: zeigt eine schematische Schnittansicht eines erfindungsgemäßen Reflektors mit einer reflektierenden Aluminium- oder Silberschicht und einem darauf befindlichen Wechselschichtsystem aus SiO2- und TiO2-Schichten zur Erhöhung der Reflexion im sichtbaren Bereich des Spektrums und einer darauf befindlichen Kaltlichtspiegelbeschichtung, bestehend aus einer Chromoxidschicht und einem darauf befindlichen Wechselschichtsystem aus SiO2- und TiO2-Schichten,
- Fig. 1e: zeigt eine schematische Schnittansicht eines erfindungsgemäßen Reflektors mit einer reflektierenden Aluminium- oder Silberschicht und einer darauf befindlichen zweigeteilten Kaltlichtspiegelbeschichtung, bestehend aus einer Chromoxidschicht und einem darauf befindlichen Wechselschichtsystem aus SiO2- und TiO2-Schichten und einer weiteren Chromoxidschicht mit einem darauf befindlichen Wechselschichtsystem aus SiO2-und TiO2-Schichten,
- Fig. 1f: zeigt eine schematische Schnittansicht eines erfindungsgemäßen Reflektors mit einer reflektierenden Aluminium- oder Silberschicht und einem darauf befindlichen Wechselschichtsystem zur Erhöhung der Reflexion im sichtbaren Bereich des Spektrums sowie einer darauf befindlichen zweigeteilten Kaltlichtspiegelbeschichtung, bestehend aus einer Chromoxidschicht und einem darauf befindlichen Wechselschichtsystem aus SiO2- und TiO2-Schichten und einer weiteren Chromoxidschicht mit einem darauf befindlichen Wechselschichtsystem aus SiO2-und TiO2-Schichten,
- Fig. 1g: zeigt ein Beispiel eines erfindungsgemäßen Reflektors mit einer absorbierenden Schwarzschicht und einem darauf befindlichen Wechselschichtsystem,
- Fig. 2: zeigt ebenfalls eine schematische Schnittansicht eines erfindungsgemäßen Reflektors mit einer Hochleistungslampe,
- Fig. 3: zeigt eine schematische Ansicht eines erfindungsgemäßen Reflektors umfassend Kühlrippen,
- Fig. 4: zeigt eine schematische Ansicht eines erfindungsgemäßen Reflektors mit Kühlrippen,
- Fig. 5: zeigt eine schematische perspektivische Ansicht eines erfindungsgemäßen Reflektors mit muldenförmigen Einbuchtungen,
- Fig. 6: zeigt eine weitere schematische Schnittansicht eines erfindungsgemäßen Reflektors umfassend Zentrierungsmittel und eine reflektierende Schutzscheibe,
- Fig. 7: zeigt eine schematische Ansicht eines erfindungsgemäßen Reflektors umfassend eine externe Kühlmittelzufuhr,
- Fig. 8: zeigt eine weitere schematische Schnittansicht eines erfindungsgemäßen Reflektors umfassend einen mit einem Hohlraum für ein Kühlfluid und Kühlrippen ausgestatteten Grundkörper,
- Fig. 9: zeigt eine Beschichtungsanlage vorgesehen zur Beschichtung der erfindungsgemäßen Reflektoren.
- Fig. 10: zeigt eine schematische Ansicht eines erfindungsgemäßen Projektionssystems.

- Fig. 11 bis 13: zeigen spektrale Verläufe der Reflektivität von Schwarzschichten, wie sie als infrarotabsorbierende Schichten für Kaltlichtreflektor-Beschichtungen für erfindungsgemäße Reflektoren eingesetzt werden können.

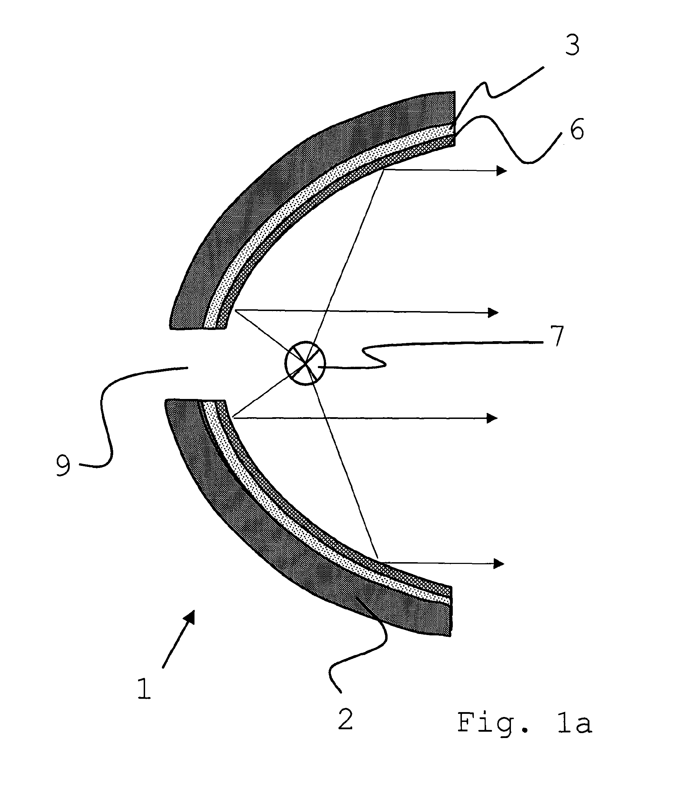

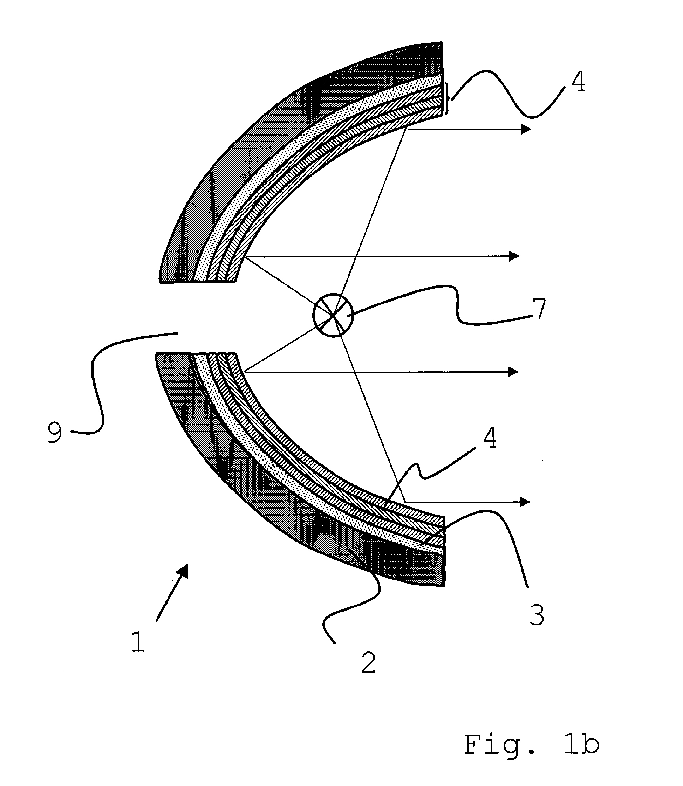

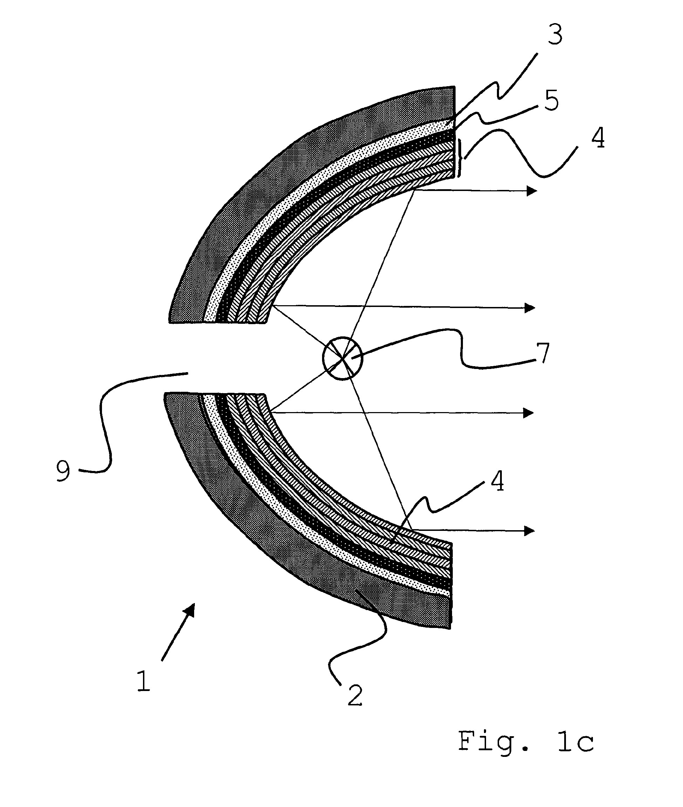

Fig. 1a bis 1f zeigen eine schematische Schnittansicht eines erfindungsgemäßen Reflektors 1 in verschiedenen Ausführungsformen der aufgebrachten Beschichtung. Der Reflektor ist mittels eines spanabhebenden Verfahrens gefertigt aus einem Metallblock und weist demzufolge ein dickwandiges Metallsubstrat 2 auf. Die Reflektorgeometrie ist im Wesentlichen parabolisch. Der Reflektor 1 weist eine konzentrische Aussparung 9 auf, durch die ein Leuchtmittel eingeführt werden kann.

Gemäß des Ausführungsbeispiels Fig. 1a ist das Metallsubstrat 2 mit einer Silber- oder Aluminiumreflexschicht 3 sowie einer Schutzschicht 6 in Form einer einzelnen Schicht beispielsweise SiO2 versehen. Im Zentrum des Reflektors ist schematisch eine Lichtquelle 7 eingezeichnet.

Gemäß des Ausführungsbeispiels Fig. 1b ist das Metallsubstrat 2 mit einer Silber- oder Aluminiumreflexionsschicht 3 sowie einer Wechselschicht 4 versehen. Die Wechselschicht 4 besteht in dem Ausführungsbeispiel aus insgesamt drei jeweils im Wechsel aufgesputterten Titanoxid- und Siliziumoxidschichten. Die aufgebrachten Wechselschichten haben in diesem Ausführungsbeispiel die Funktion, die Reflexion zumindest eines Teils des sichtbaren Lichtes gegenüber der Reflexion der unbeschichteten Metalloberfläche des Reflektors 1 zu erhöhen. Im Zentrum des Reflektors ist schematisch eine Lichtquelle 7 eingezeichnet.

Gemäß des Ausführungsbeispiels Fig. 1c ist das Metallsubstrat 2 mit einer Silber- oder Aluminiumreflexionsschicht 3 sowie einer teilweise absorbierenden Chromoxidschicht 5 und einer Wechselschicht 4 versehen. Die Wechselschicht 4 besteht in dem Ausführungsbeispiel aus insgesamt vier jeweils im Wechsel aufgesputterten Titanoxid- und Siliziumoxidschichten. Die Funktion dieses Ausführungsbeispiels ist die einer Kaltlichtspiegelbeschichtung auf einem reflektierenden Metallsubstrat. Im Zentrum des Reflektors ist schematisch eine Lichtquelle 5 eingezeichnet.

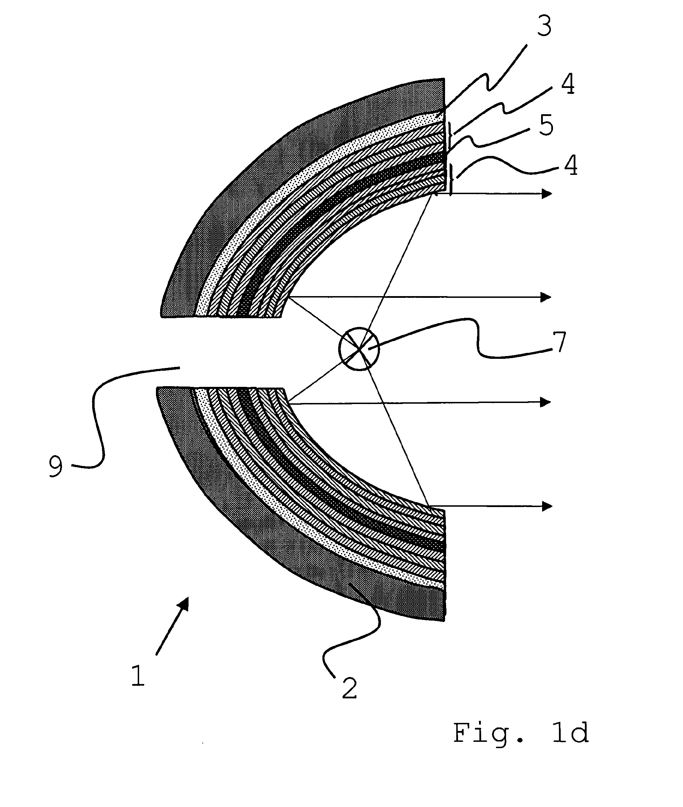

Gemäß des Ausführungsbeispiels Fig. 1d ist das Metallsubstrat 2 mit einer Silber- oder Aluminiumreflexschicht 3 und einer darauf befindlichen Wechselschicht 4 zur Erhöhung der Reflexion der metallischen Oberfläche versehen. Die Wechselschicht 4 besteht in dem Ausführungsbeispiel aus insgesamt drei jeweils im Wechsel aufgesputterten Titanoxid- und Siliziumoxidschichten. Auf diese hoch reflektierende Oberfläche ist eine Kaltlichtspiegelbeschichtung aufgebracht, bestehend aus einer teilweise absorbierenden Chromoxidschicht 5 und einer weiteren Wechselschicht 4. Diese weitere Wechselschicht 4 besteht in dem Ausführungsbeispiel aus insgesamt vier jeweils im Wechsel aufgesputterten Titanoxid- und Siliziumoxidschichten. Die Funktion dieses Ausführungsbeispiels ist die einer Kaltlichtspiegelbeschichtung auf einem besonders hoch reflektierenden Metallsubstrat. Im Zentrum des Reflektors ist schematisch eine Lichtquelle 7 eingezeichnet.

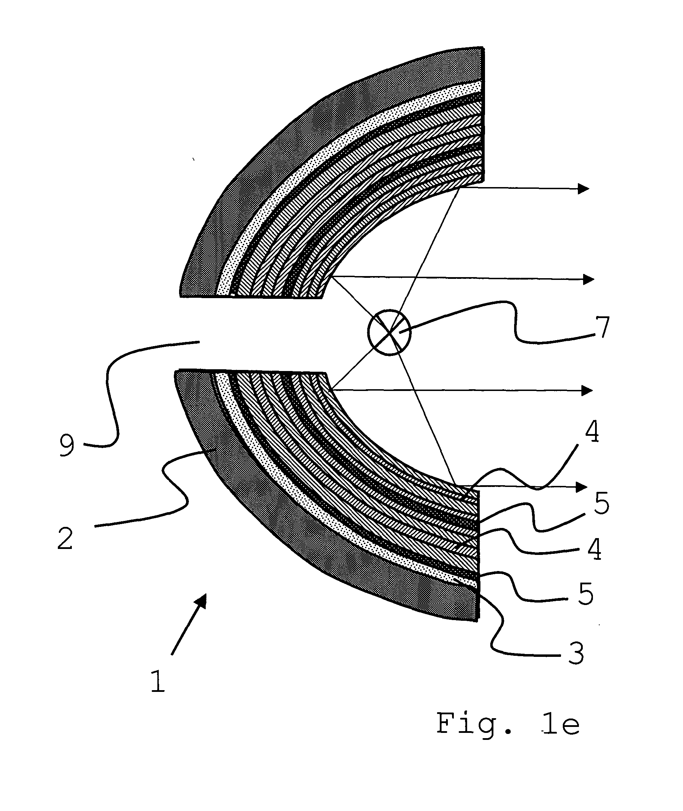

Gemäß des Ausführungsbeispiels Fig. 1e ist das Metallsubstrat 2 mit einer Silber- oder Aluminiumreflexionsschicht 3 versehen. Auf diese ist eine geteilte Kaltlichtspiegelbeschichtung aufgebracht, bestehend aus jeweils einer teilweise absorbierenden Chromoxidschicht 5 und einer nachfolgenden Wechselschicht 4. Die Wechselschicht 4 besteht in dem Ausführungsbeispiel aus insgesamt vier jeweils im Wechsel aufgesputterten Titanoxid- und Siliziumoxidschichten. Die Funktion dieses Ausführungsbeispiels ist die einer Kaltlichtspiegelbeschichtung auf einem reflektierenden Metallsubstrat mit besonders guter Kaltlichtspiegelwirkung. Im Zentrum des Reflektors ist schematisch eine Lichtquelle 7 eingezeichnet.

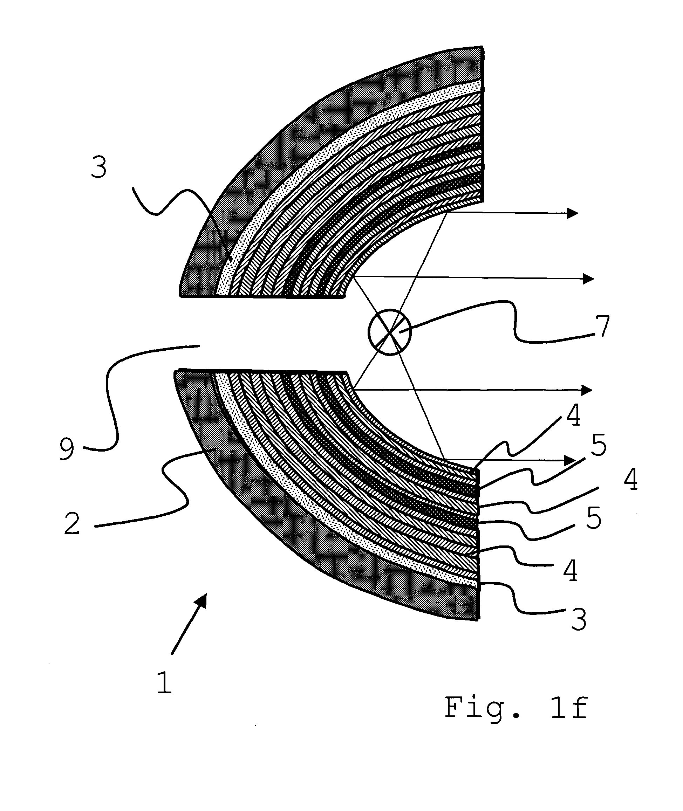

Gemäß des Ausführungsbeispiels Fig. 1f ist das Metallsubstrat 2 mit einer Silber- oder Aluminiumreflexionsschicht 3 versehen und einer darauf befindlichen Wechselschicht 4 zur Erhöhung der Reflexion der metallischen Oberfläche. Die Wechselschicht 3 besteht in dem Ausführungsbeispiel aus insgesamt drei jeweils im Wechsel aufgesputterten Titanoxid- und Siliziumoxidschichten. Auf diese ist eine geteilte Kaltlichtspiegelbeschichtung aufgebracht, bestehend aus jeweils einer teilweise absorbierenden Chromoxidschicht 5 und einer nachfolgenden Wechselschicht 4. Die Wechselschicht 4 besteht in dem Ausführungsbeispiel aus insgesamt vier jeweils im Wechsel aufgesputterten Titanoxid- und Siliziumoxidschichten. Die Funktion dieses Ausführungsbeispiels ist die einer Kaltlichtspiegelbeschichtung auf einem besonders hoch reflektierenden Metallsubstrat mit besonders guter Kaltlichtspiegelwirkung. Im Zentrum des Reflektors ist schematisch eine Lichtquelle 7 eingezeichnet.

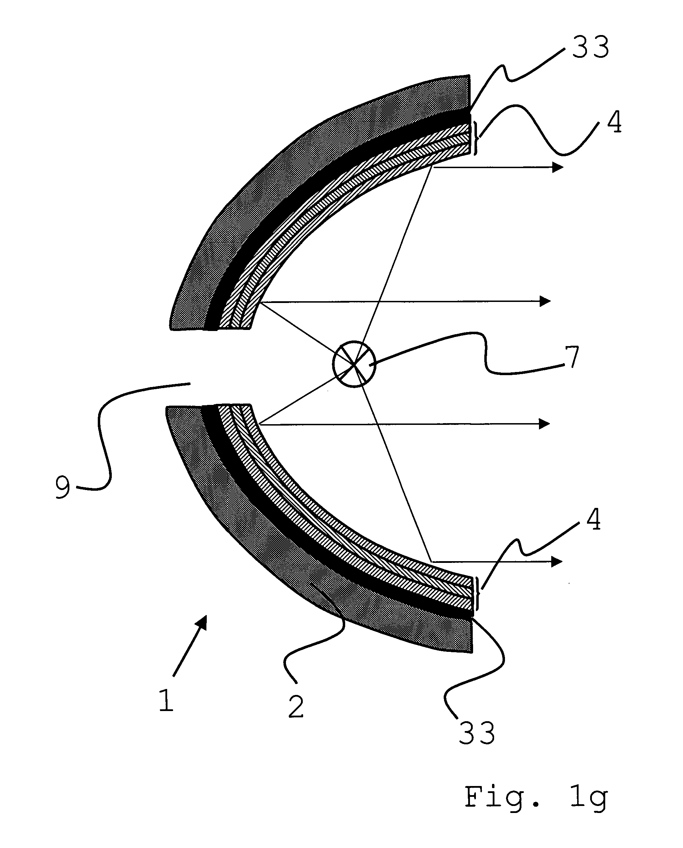

In Fig. 1g ist in schematischer Querschnittansicht ein weiteres Beispiel eines erfindungsgemäßen Reflektors dargestellt. Auf der Reflektorinnenseite ist eine absorbierende Schwarzschicht 33 und darauf ein Wechselschichtsystem aufgebracht, welches wie bei einem Kaltlicht-Reflektor sichtbares Licht reflektiert und Infrarotlicht transmittiert. Das Infrarotlicht wird von der Schwarzschicht 33 absorbiert und in Wärme umgewandelt und kann durch den Reflektorkörper, beziehungsweise das Metallsubstrat aufgenommen und eventuell über Kühlmittel abgeleitet werden.

Die Schwarzschicht kann beispielsweise eine durch Dampfphasenabscheidung aufgebrachte TiCN, WCH oder AlTiN-Schicht umfassen. Hinsichtlich der Temperaturwechselbeständigkeit hat sich auch eine absorbierende Email-Schicht als besonders geeignet erwiesen. Ebenfalls kann eine solche Schicht auch galvanisch als absorbierende Eloxal-Schicht ausgeführt sein. Weiterhin geeignet sind Schwarzchrom und/oder Schwarznickel-Schichten.

Eine erfindungsgemäße Schwarzschicht ist insbesondere dann geeignet, wenn sie im sichtbaren und insbesondere auch im Infrarotbereich bis 1800 Nanometern Wellenlänge eine Absorption von zumindest 80%, bevorzugt bis 2400 Nanometern Wellenlänge eine Absorption von zumindest 75% aufweist.

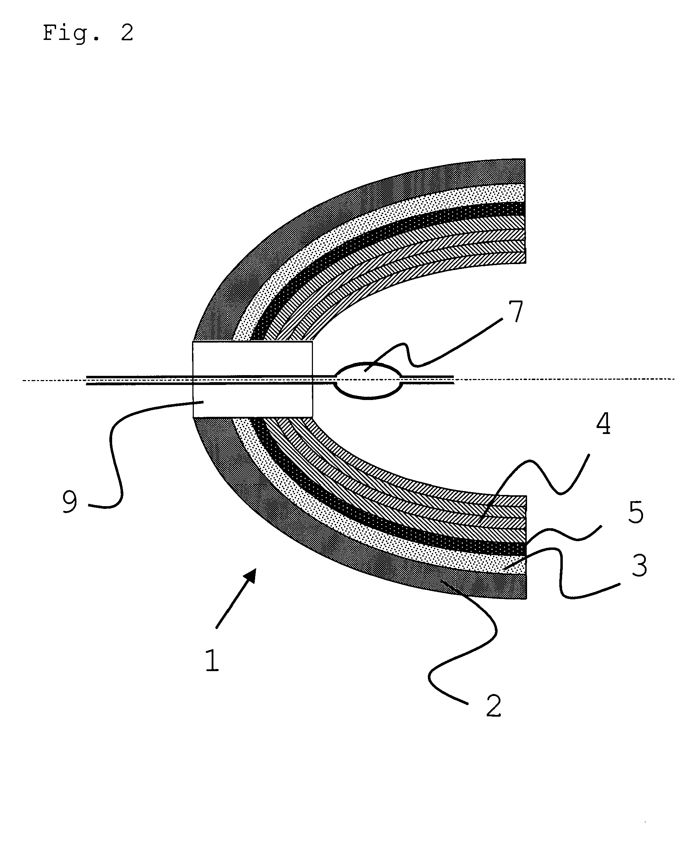

Fig. 2 zeigt ebenfalls eine schematische Schnittansicht eines Reflektors 1 mit einem dickwandigen Metallsubstrat 2, einer Reflexionsschicht 3 und einer Infrarot-absorbierenden Kaltlichtspiegelbeschichtung am Beispiel der Ausführungsform in Fig. 1c. Als Lichtquelle 7 ist eine Hochleistungslampe vorgesehen.

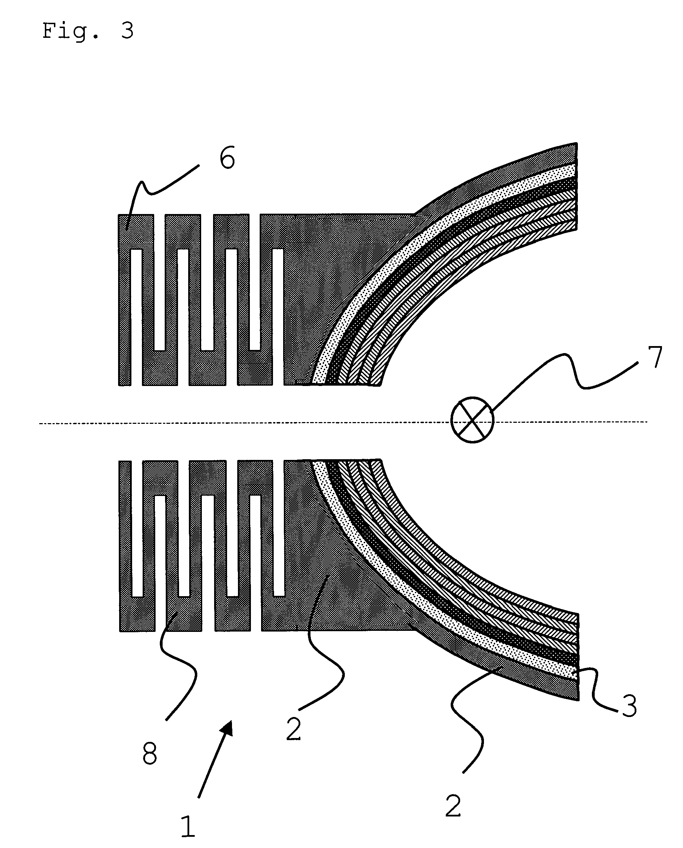

Fig. 3 zeigt ebenfalls ein schematisches Beispiel für einen erfindungsgemäßen Reflektor 1. Auch dieser Reflektor 1 ist aus einem Metallvollblock durch ein spanabhebendes Verfahren hergestellt. Der Reflektor ist einstückig ausgebildet. Das Metallsubstrat 2 weist an seiner Rückseite mäanderförmige Kühlrippen 8 auf und ist auf der Vorderseite ebenfalls mit einer Reflexionsschicht 3, und einer Infrarot-absorbierenden Kaltlichtspiegelbeschichtung am Beispiel der Ausführungsform in Fig. 1c versehen.

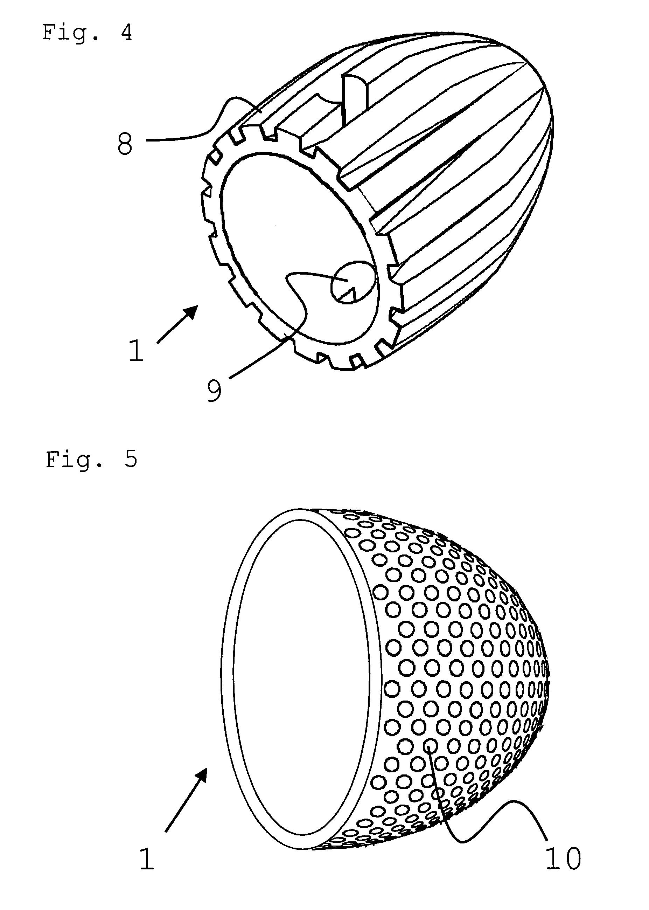

Fig. 4 zeigt ein weiteres Ausführungsbeispiel eines erfindungsgemäßen Reflektors schematisch in einer perspektivischen Ansicht. Der Reflektor 1 weist Kühlrippen 8 sowie eine Aussparung 9 in Form einer Bohrung in der Seitenwand auf, um ein Leuchtmittel (nicht zu sehen) einzubringen.

Fig. 5 zeigt eine weitere Ausführungsform eines erfindungsgemäßen Reflektors. Dieser Reflektor 1 hat auf der Rückseite eine Struktur in Form von muldenförmigen Einsenkungen 10, auch Dimpel genannt. Diese Dimpel führen bei geeigneten Randbedingungen zur Erzeugung von Wirbeln des vorbeiströmenden Kühlfluids. So kann die Wärmeabfuhr des Reflektors wesentlich verbessert werden.

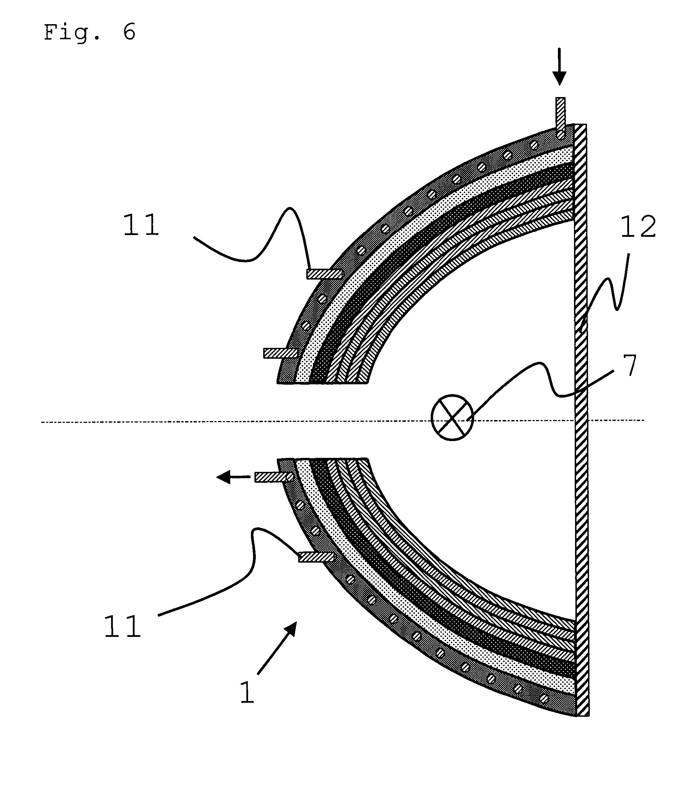

Fig. 6 zeigt eine weitere schematische Schnittansicht eines erfindungsgemäßen Reflektors 1. Dieser Reflektor weist als Passmittel Passstifte 11 auf, mit denen der Reflektor definiert in einer Halterung (nicht zu sehen) eingesetzt werden kann. Auf der Vorderseite ist zusätzlich eine Infrarot-absorbierende Scheibe 12 angeordnet, so dass nur eine geringe Menge von Infrarotstrahlung nach außen tritt.

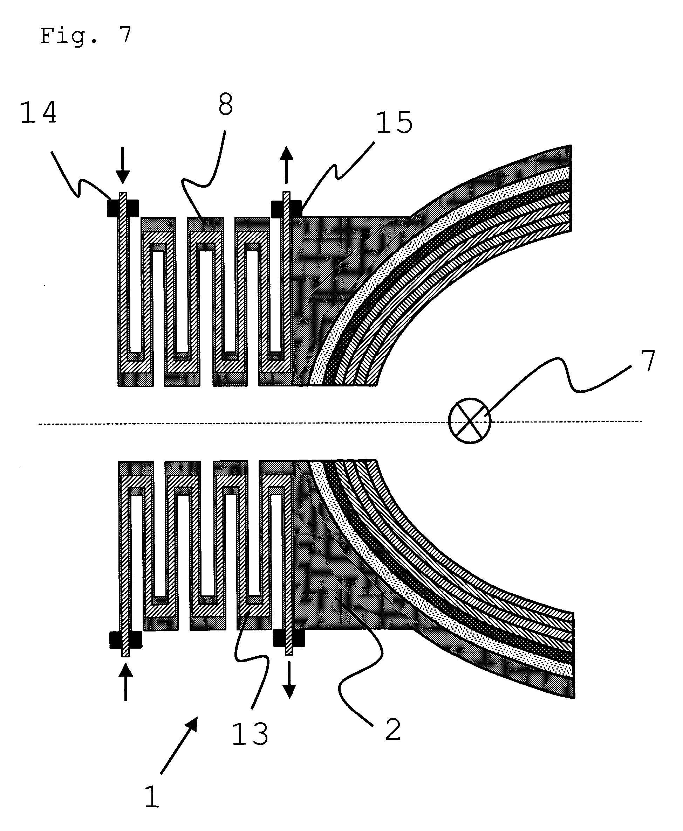

Fig. 7 zeigt eine weitere schematische Schnittansicht eines Ausführungsbeispiels eines erfindungsgemäßen Reflektors 1. Auch dieser Reflektor umfasst ein Metallsubstrat 2. Der Reflektor weist mäanderförmige Kühlrippen 8 auf, in die Kühlkanäle 13 eingelassen sind. Am Einlass 14 und am Auslass 15 sind die Kühlkanäle an einen externen Kühlkreislauf (nicht zu sehen) anschließbar.

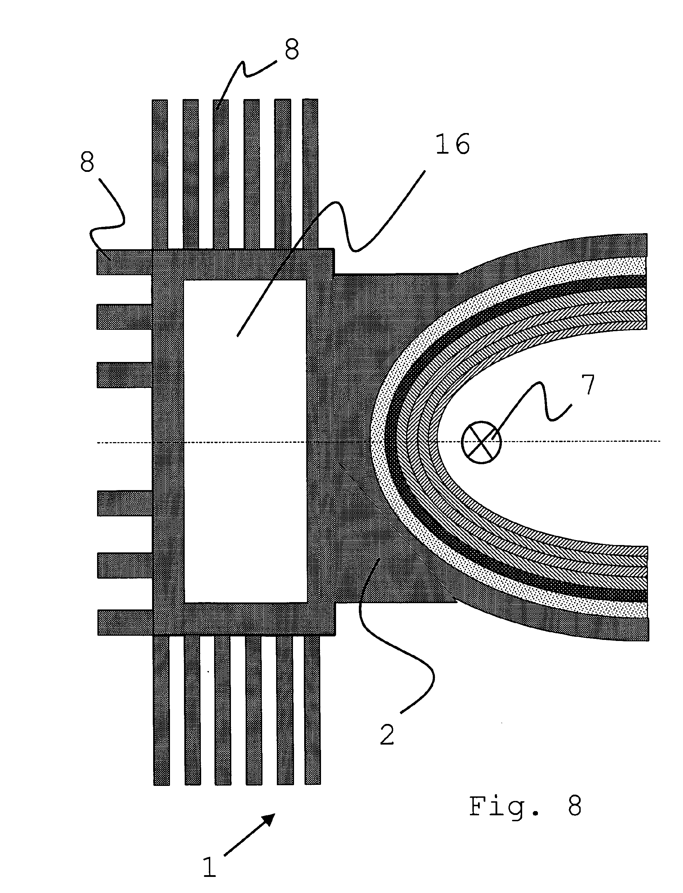

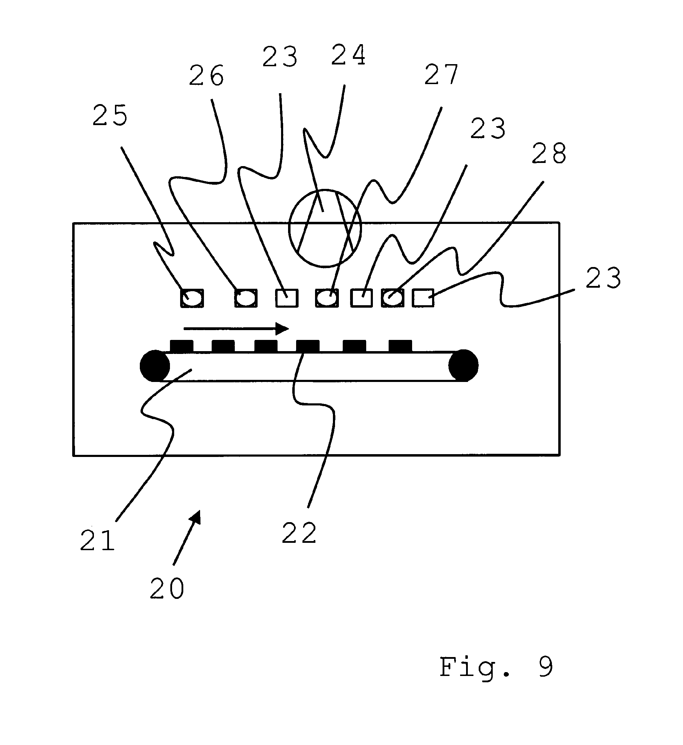

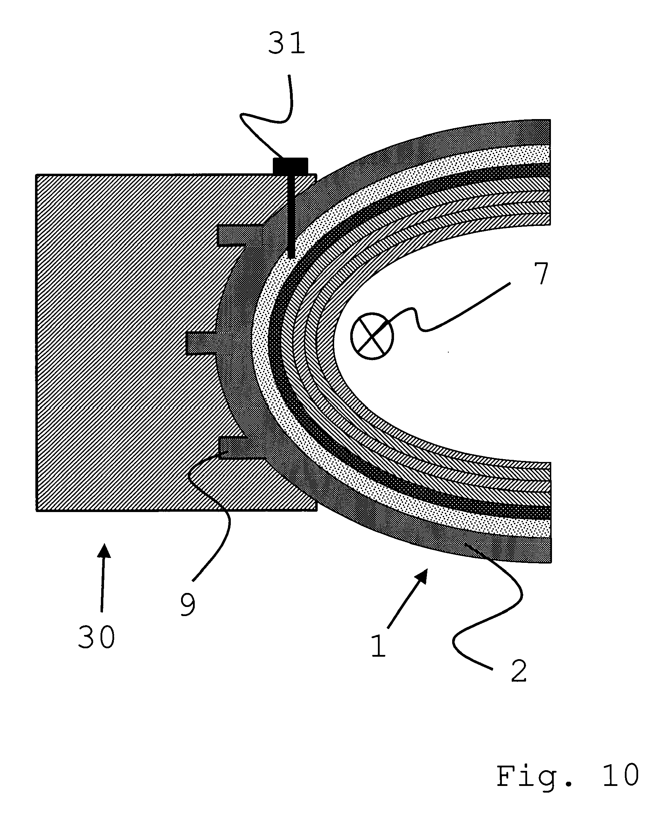

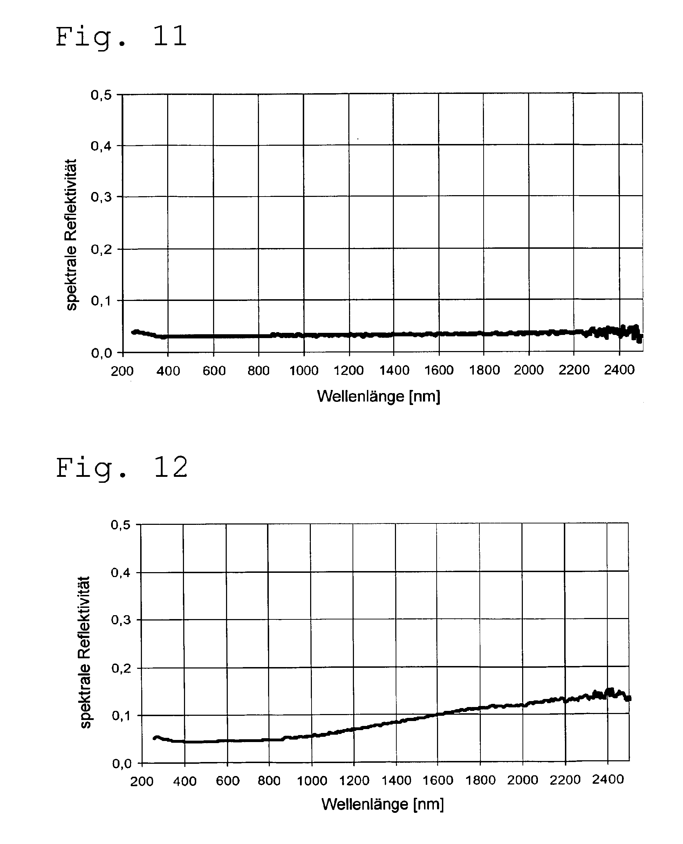

Fig. 8 zeigt eine weitere vorteilhafte Ausführungsform eines erfindungsgemäßen Reflektors. Der Reflektor 1 umfasst einen Metallgrundkörper aus einem Metallsubstrat 2, der randseitige Kühlrippen 8 aufweist. Rückseitig weist der Reflektor 1 ferner einen Hohlraum 16 auf, der mit Kühlmittel gefüllt ist, was in dem Hohlraum durch Konvektion die Kühlung weiter verbessert. So ist es möglich auch bei einem Reflektor 1, der eine Lichtquelle 7 in Form eines Hochleistungsleuchtmittel umfasst, auf eine Zwangsbelüftung mittels beispielsweise elektrisch betriebener Ventilatoren zu verzichten.

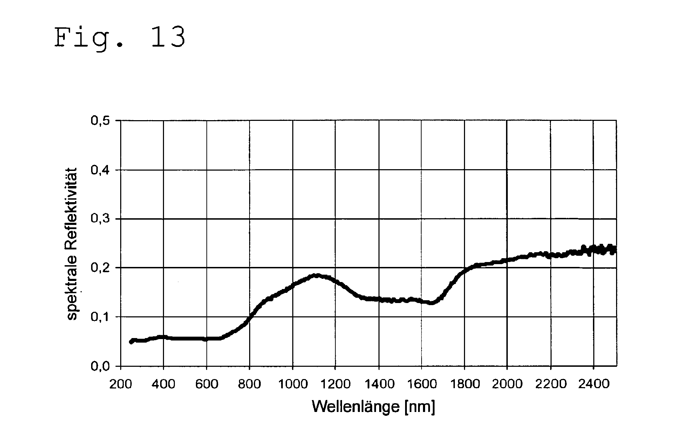

Fig. 9 zeigt eine schematische Ausführungsform einer Beschichtungsanlage 20 für das erfindungsgemäße Beschichtungsverfahren. Die Beschichtungsanlage 20 umfasst ein Laufband 21, auf dem die Reflektorsubstrate 22 angeordnet werden. Die Laufrichtung ist mit einem Pfeil markiert. Mittels eines Sputterverfahrens kann durch ein Silber- oder Aluminiumtarget 25 zunächst eine reflektierende Silber- oder Aluminiumschicht aufgebracht werden. Durch ein Chromtarget 26 kann anschließend eine Chromschicht aufgesputtert werden. Sodann läuft das Substrat an Siliziumtargets 27 und Titantargets 28 vorbei. Mittels dazwischen angeordneten Sauerstoffplasmaquellen 23 ist es möglich, aus der Chromschicht eine Chromoxidschicht zu machen und ein Titan- und Siliziumoxidwechselschichtsystem aufzubringen. Die Anlage wird über zumindest eine Vakuumpumpe 24 evakuiert.

Fig. 10 zeigt eine schematische Ansicht eines erfindungsgemäßen Projektionssystems. Der Reflektor weist Passmittel in Form von Passstiften 11 auf, die Teil des Metallgrundkörpers 2 sind. Im Reflektor 1 ist eine Lichtquelle 7 in Form einer Hochleistungslichtlampe angeordnet. Durch die Passstifte 11 kann der Reflektor l lagedefiniert in eine Halterung 30 eingesetzt werden. Sodann wird der Reflektor 1 mittels einer Schraube 31, die durch die Halterung 30 schraubbar ist, gegen Herausfallen gesichert.

Die Fig. 11 bis 13 zeigen die spektralen Absorptionseigenschaften verschiedener Ausführungsbeispiele von infrarotabsorbierenden Schichten, die zum Beispiel als Schwarzschicht 33 für einen Reflektor gemäß Fig. 1g oder zusätzlich oder alternativ zu einer absorbierenden Chromoxidschicht 5, wie sie die Ausführungsbeispiele der Fig. 1c bis 1f oder Fig. 2 aufweisen, eingesetzt werden können. Dabei zeigt Fig. 11 die spektrale Reflexion einer Schwarzchrom-Schicht. Eine derartige Schicht wird vorzugsweise galvanisch auf dem metallischen Reflektorkörper abgeschieden. Anhand von Fig. 11 ist zu erkennen, daß eine derartige Schicht sehr gute Absorptionseigenschaften über einen weiten Wellenlängenbereich aufweist. So liegt die spektrale Absorption in einem Bereich von unter 300 nm bis über 2400 nm bei ca. 95 % der eingestrahlten Strahlung.

In Fig. 12 sind die Absorptionseigenschaften einer Schwarz-Eloxalschicht als Schwarzschicht dargestellt. Die Absorption ist hier im sichtbaren Spektralbereich besonders hoch, die Reflektivität steigt dann im Infraroten langsam an. Insgesamt zeigt sich, daß mit einer Schwarz-Eloxalschicht ca. 85% bis 95% der eingestrahlten Strahlung im Wellenlängenbereich von 400 Nanometern bis 2400 Nanometern absorbiert werden.

Fig. 13 schließlich zeigt die spektrale Reflektivität einer Schwarzschicht in Form einer absorbierenden Emailschicht. Die Absorptionseigenschaften sind etwas schlechter als die von Schwarz-Eloxal- oder Schwarzchrom-Schichten, jedoch wird auch hier im sichtbaren und insbesondere auch im Infrarotbereich eine Absorption von im Mittel zumindest 75% erreicht. Die spektrale Absorption bleibt sogar vom Ultraviolettbereich bis zum Infraroten bei 2400 Nanometern über 75%, in einem Bereich bis 1800 Nanometern Wellenlänge insbesondere über ca. 80%. Die Email-Schicht weist außerdem eine sehr gute Haftung auf dem Metallsubstrat und eine hohe Temperaturwechselbeständigkeit auf.

### Bezugszeichenliste

- 1: Reflektor
- 2: Metallsubstrat
- 3: Reflexionsschicht
- 4: Wechselschicht
- 5: Cromoxidschicht
- 6: Schutzschicht
- 7: Lichtquelle
- 8: Kühlrippen
- 9: Aussparung
- 10: Einsenkung
- 11: Passstift
- 12: Scheibe
- 13: Kühlkanal
- 14: Einlass
- 15: Auslass
- 16: Hohlraum
- 20: Beschichtungsanlage
- 21: Laufband
- 22: Substrat
- 23: Sauerstoffquelle
- 24: Vakuumpumpe
- 25: Al bzw. Ag-Target
- 26: Cr-Target
- 27: Si-Target
- 28: Ti-Target
- 30: Halterung
- 31: Schraube
- 33: Schwarzschicht

## Patentansprüche

1. Verfahren zur Herstellung eines hochpräzisen Reflektors, umfassend die Schritte:
- Bereitstellen eines Körpers der zumindest ein Metall umfasst,
- Erzeugen einer Reflektorgeometrie mit zumindest einem Material abtragenden Fertigungsverfahren.

2. Verfahren zur Herstellung eines Reflektors nach Anspruch 1, **dadurch gekennzeichnet, dass** das Material abtragende Fertigungsverfahren ein spanabhebendes Verfahren, insbesondere Drehen und/oder Fräsen umfasst.

3. Verfahren zur Herstellung eines Reflektors nach Anspruch 1, **dadurch gekennzeichnet, dass** das Material abtragende Fertigungsverfahren Elektroerodieren umfasst.

4. Verfahren zur Herstellung eines Reflektors nach einem der vorstehenden Ansprüche, **dadurch gekennzeichnet, dass** die Reflektoroberfläche zumindest abschnittsweise geläppt, geschliffen und/oder poliert wird.

5. Verfahren zur Herstellung eines Reflektors nach einem der vorstehenden Ansprüche, **dadurch gekennzeichnet, dass** eine im Wesentlichen parabolische oder elliptische Reflektorgeometrie erzeugt wird.

6. Verfahren zur Herstellung eines Reflektors nach einem der vorstehenden Ansprüche, dadurc9h **gekennzeichnet**, dass auf der Rückseite des Reflektors mit einem Material abtragenden Verfahren zumindest eine Struktur erzeugt wird.

7. Verfahren zur Herstellung eines Reflektors nach einem der vorstehenden Ansprüche, **dadurch gekennzeichnet, dass** die Struktur zumindest ein Gewinde, Kühlrippen und/oder Passmittel umfasst.

8. Verfahren zur Herstellung eines Reflektors nach einem der vorstehenden Ansprüche, **dadurch gekennzeichnet, dass** der Körper Edelstahl, Aluminium, Kupfer und/oder Silber umfasst.

9. Verfahren zur Herstellung eines Reflektors nach einem der vorstehenden Ansprüche, **dadurch gekennzeichnet, dass** der Reflektor mit einer Reflexionsschicht, insbesondere einer Aluminium und/oder Silber umfassenden Schicht beschichtet wird.

10. Verfahren zur Herstellung eines Reflektors nach einem der vorstehenden Ansprüche, **dadurch gekennzeichnet, dass** auf die Reflexionsschicht eine Wechselschicht, insbesondere eine Siliziumoxid und Titanoxid umfassende Wechselschicht aufgebracht wird.

11. Verfahren zur Herstellung eines Reflektors nach einem der vorstehenden Ansprüche, **dadurch gekennzeichnet, dass** der Reflektor mit einer Kaltlichtspiegelschicht beschichtet wird.

12. Verfahren zur Herstellung eines Reflektors nach dem vorstehenden Anspruch, **dadurch gekennzeichnet, dass** die Kaltlichtspiegelschicht eine Cromoxidschicht umfasst.

13. Verfahren zur Herstellung eines Reflektors nach dem vorstehenden Anspruch, **dadurch gekennzeichnet, dass** auf die Kaltlichtspiegelschicht eine Wechselschicht, insbesondere eine Siliziumoxid und Titanoxid umfassende Wechselschicht aufgebracht wird.

14. Verfahren zur Herstellung eines Reflektors nach einem der vorstehenden Ansprüche, **dadurch gekennzeichnet, dass** zumindest eine Schicht mittels eines PVD- oder CVD-Verfahrens abgeschieden wird.

15. Verfahren nach dem vorstehenden Anspruch, **dadurch gekennzeichnet, dass** zumindest zwei Schichten in einer Beschichtungsanlage aufgebracht werden.

16. Reflektor mit einer reflektierenden Innenseite und einer Außenseite, insbesondere herstellbar mit einem Verfahren nach einem der vorstehenden Ansprüche, **dadurch gekennzeichnet, dass** der Reflektor ein Metallsubstrat und zumindest eine mittels eines PVD-oder CVD-Verfahrens abgeschiedene Beschichtung aufweist.

17. Reflektor nach dem vorstehenden Anspruch, **dadurch gekennzeichnet dass** der Reflektor zumindest an der Außenseite Kühlrippen aufweist.

18. Reflektor nach einem der vorstehenden Ansprüche, **dadurch gekennzeichnet, dass** der Reflektor Kühlkanäle aufweist.

19. Reflektor nach einem der vorstehenden Ansprüche, **dadurch gekennzeichnet, dass** der Reflektor zumindest einen Flansch zum Anschluss an einen externen Kühlmittelkreislauf umfasst.

20. Reflektor nach einem der vorstehenden Ansprüche, **dadurch gekennzeichnet, dass** der Reflektor zumindest einen zumindest teilweise mit einem Kühlmittel gefüllten Hohlraum aufweist.

21. Reflektor nach dem vorstehenden Anspruch, **dadurch gekennzeichnet, dass** ein Kühlmittel mit einem Phasenübergang in etwa bei Betriebstemperatur hat, insbesondere das Kühlmittel Propan und/oder Butan umfasst.

22. Reflektor nach einem der vorstehenden Ansprüche, **dadurch gekennzeichnet, dass** der Reflektor Passmittel, insbesondere Stifte, Nut, Feder oder Konus, aufweist.

23. Reflektor nach einem der vorstehenden Ansprüche, **dadurch gekennzeichnet, dass** der Reflektor zumindest auf der Innenseite eine Infrarotstrahlung absorbierende Beschichtung aufweist.

24. Reflektor nach einem der vorstehenden Ansprüche, **dadurch gekennzeichnet, dass** der Reflektor zumindest auf der Innenseite eine Schwarzschicht umfasst.

25. Reflektor nach Anspruch 24, **dadurch gekennzeichnet, daß** die Schwarzschicht eine TiCN, WCH oder AlTiN-Schicht umfaßt.

26. Reflektor nach Anspruch 24 oder 25, **dadurch gekennzeichnet, daß** die Schwarzschicht eine absorbierende Email-Schicht umfasst.

27. Reflektor nach einem der Ansprüche 24 bis 26, **dadurch gekennzeichnet, daß** die Schwarzschicht eine absorbierende Eloxal-Schicht umfasst.

28. Reflektor nach einem der Ansprüche 24 bis 26, **dadurch gekennzeichnet, daß** die Schwarzschicht eine Schwarzchrom und/oder Schwarznickel-Schicht umfasst.

29. Reflektor nach einem der vorstehenden Ansprüche, **gekennzeichnet durch** eine zumindest auf der Reflektorinnenseite angeordnete Schwarzschicht, welche im sichtbaren und insbesondere auch im Infrarotbereich bis 1800 Nanometern Wellenlänge eine Absorption von zumindest 80%, bevorzugt bis 2400 Nanometern Wellenlänge eine Absorption von zumindest 75% aufweist.

30. Reflektor nach einem der vorstehenden Ansprüche, **dadurch gekennzeichnet, dass** die Oberfläche der Innenseite einen Mittenrauhwert Rₐ von unter 200 nm, bevorzugt unter 50 nm, besonders bevorzugt unter 20 nm aufweist.

31. Reflektor nach einem der vorstehenden Ansprüche, **dadurch gekennzeichnet, dass** der Reflektor zumindest auf der Innenseite eine Toleranzfeldbreite von unter 200 µm, bevorzugt unter 50 µm, besonders bevorzugt unter 10 µm aufweist.

32. Reflektor nach einem der vorstehenden Ansprüche, **dadurch gekennzeichnet, dass** der Reflektor zumindest auf der reflektierenden Innenseite eine Materialdicke über 0,3 mm, bevorzugt über 0,8 mm, besonders bevorzugt über 1,5 mm aufweist.

33. Reflektor nach einem der vorstehenden Ansprüche, **dadurch gekennzeichnet, dass** der Reflektor einstückig ausgebildet ist.

34. Reflektor nach einem der vorstehenden Ansprüche, **dadurch gekennzeichnet, dass** der Reflektor zumindest auf der Rückseite Einsenkungen mit im Wesentlichen muldenförmigen Querschnitt aufweist.

35. Verfahren zur Beschichtung eines Metallreflektors, insbesondere eines Metallreflektors nach einem der vorstehenden Ansprüche umfassend die Schritte:
- Bereitstellen eines Reflektorsubstrates,
- Abscheiden zumindest einer Funktionsschicht, insbesondere einer Absorptionsschicht und/oder Reflexionsschicht zumindest auf der Oberseite des Reflektorsubstrates.

36. Verfahren zur Beschichtung eines Metallreflektors nach dem vorstehenden Anspruch, **dadurch gekennzeichnet, dass** als Substrat ein aus einem Vollmaterial durch ein materialabtragendes Fertigungsverfahren hergestelltes Reflektorsubstrat verwendet wird.

37. Verfahren zur Beschichtung eines Metallreflektors nach dem vorstehenden Anspruch, **dadurch gekennzeichnet, dass** das als Reflektorsubstrat ein tiefgezogenes Metallreflektorsubstrat verwendet wird.

38. Verfahren zur Beschichtung eines Metallreflektors nach einem der vorstehenden Ansprüche, **dadurch gekennzeichnet, dass** eine im Wesentlichen Infrarot-Strahlung absorbierende Schicht abgeschieden wird.

39. Verfahren zur Beschichtung eines Metallreflektors nach einem der vorstehenden Ansprüche, **dadurch gekennzeichnet, dass** eine Metallschicht abgeschieden und oxidiert wird.

40. Verfahren gemäß einem der vorstehenden Ansprüche, **dadurch gekennzeichnet, daß** zumindest auf der Reflektorinnenseite eine absorbierende Schwarzschicht durch Dampfphasenabscheindung aufgebracht wird.

41. Verfahren gemäß einem der vorstehenden Ansprüche, **dadurch gekennzeichnet, daß** zumindest auf der Reflektorinnenseite eine TiCN, WCH oder AlTiNenthaltende absorbierende Schwarzschicht aufgebracht wird.

42. Verfahren gemäß einem der vorstehenden Ansprüche, **dadurch gekennzeichnet, daß** zumindest auf der Reflektorinnenseite eine absorbierende Email-Schicht aufgebracht wird.

43. Verfahren gemäß einem der vorstehenden Ansprüche, **dadurch gekennzeichnet, daß** zumindest auf der Reflektorinnenseite eine absorbierende Eloxal-Schicht galvanisch oder durch chemische Reaktion mit dem Substratmaterial hergestellt wird.

44. Verfahren gemäß einem der vorstehenden Ansprüche, **dadurch gekennzeichnet, daß** zumindest auf der Reflektorinnenseite eine absorbierende Schwarzchrom- oder Schwarznickelschicht aufgebracht wird.

45. Verfahren zur Beschichtung eines Metallreflektors nach einem der vorstehenden Ansprüche, **dadurch gekennzeichnet, dass** eine Oxid- und/oder Nitridschicht abgeschieden wird.

46. Verfahren zur Beschichtung eines Metallreflektors nach einem der vorstehenden Ansprüche, **dadurch gekennzeichnet, dass** auf das Metallsubstrat zumindest eine Reflexionsschicht abgeschieden wird.

47. Verfahren zur Beschichtung eines Metallreflektors nach einem dem vorstehenden Anspruch, **dadurch gekennzeichnet, dass** als Reflexionsschicht eine Aluminium und/oder Silberschicht aufgebracht wird.

48. Verfahren zur Beschichtung eines Metallreflektors nach einem der vorstehenden Ansprüche, **dadurch gekennzeichnet, dass** eine transparente Schutzschicht auf den Reflektor aufgebracht wird.

49. Verfahren zur Beschichtung eines Metallreflektors nach einem der vorstehenden Ansprüche, **dadurch gekennzeichnet, dass** eine transparente Wechselschicht aufgebracht wird.

50. Verfahren zur Beschichtung eines Metallreflektors nach dem vorstehenden Anspruch, **dadurch gekennzeichnet, dass** die Wechselschicht Siliziumoxid und Titanoxid umfasst.

51. Verfahren zur Beschichtung eines Metallreflektors nach einem der vorstehenden Ansprüche, **dadurch gekennzeichnet, dass** zumindest eine Chromoxidschicht abgeschieden wird.

52. Verfahren zur Beschichtung eines Metallreflektors nach einem der vorstehenden Ansprüche, **dadurch gekennzeichnet, dass** zumindest eine Schicht mittels eines PVD-, insbesondere Sputter oder Aufdampf-, oder CVD-Verfahrens aufgebracht wird.

53. Verfahren zur Beschichtung eines Metallreflektors nach einem der vorstehenden Ansprüche, **dadurch gekennzeichnet, dass** zumindest zwei Schichten in einer Vakuumanlage aufgebracht werden.

54. Verfahren zur Beschichtung eines Metallreflektors nach einem der vorstehenden Ansprüche, **dadurch gekennzeichnet, dass** an der Rückseite im Wesentlichen Kühlrippen angeschweißt, angelötet oder angeklebt werden.

55. Verfahren zur Beschichtung eines Metallreflektors nach einem der vorstehenden Ansprüche, **dadurch gekennzeichnet, dass** die Kühlrippen im Wesentlichen als parallel zur Reflektorachse anordnete Finnen ausgebildet werden.

56. Verfahren zur Beschichtung eines Metallreflektors nach dem vorstehenden Anspruch, **dadurch gekennzeichnet, dass** die Finnen Zentrierungsmittel, insbesondere Passstifte umfassen.

57. Projektionssystem, umfassend einen Metallreflektor und eine Halterung für den Metallreflektor, **dadurch gekennzeichnet, dass** Passmittel zwischen Reflektor und Halterung vorgesehen sind.

58. Verfahren zur Beschichtung eines Metallreflektors nach einem der vorstehenden Ansprüche, **dadurch gekennzeichnet, dass** auf das Reflektorsubstrat zunächst eine Reflexionsschicht, insbesondere eine Aluminium oder Silber umfassende Schicht, dann eine Infrarot-Strahlung absorbierende Schicht, insbesondere eine Cromoxidschicht und dann eine Wechselschicht, insbesondere eine Siliziumoxid und Titanoxid umfassende Wechselschicht abgeschieden, insbesondere aufgesputtert wird.

59. Verfahren zur Beschichtung eines Metallreflektors nach dem vorstehenden Anspruch, **dadurch gekennzeichnet, dass** die Schichten nacheinander in einer Beschichtungsanlage abgeschieden werden.

60. Projektionssystem nach dem vorstehenden Anspruch, **dadurch gekennzeichnet, dass** es sich bei den Passmitteln um Passstifte, Nut und Feder und/oder einen Konus handelt.

61. Projektionssystem nach einem der vorstehenden Ansprüche, **dadurch gekennzeichnet, dass** zwischen Reflektor und Halterung Wärmeleitpaste angeordnet ist.

62. Projektionssystem nach einem der vorstehenden Ansprüche, **dadurch gekennzeichnet, dass** der Reflektor austauschbar ist.

63. Projektionssystem nach einem der vorstehenden Ansprüche, **dadurch gekennzeichnet, dass** Reflektor und Halterung mittel eines Bajonettverschlusses verbindbar sind.

64. Projektionssystem nach einem der vorstehenden Ansprüche, **dadurch gekennzeichnet, dass** der Reflektor in der Halterung einrastbar ist.

65. Projektionssystem nach einem der vorstehenden Ansprüche, **dadurch gekennzeichnet, dass** es sich beim dem Reflektor um einen Reflektor nach einem der vorstehenden Reflektoransprüchen handelt.

66. Projektionssystem nach einem der vorstehenden Ansprüche, **dadurch gekennzeichnet, dass** zwischen Reflektor und Halterung ein Kühlmittel führbar ist.

67. Projektionssystem nach einem der vorstehenden Ansprüche, **dadurch gekennzeichnet, dass** die Halterung ein Material mit guter Wärmeleitfahigkeit, insbesondere ein Metall umfasst.

68. Projektionssystem nach einem der vorstehenden Ansprüche, **dadurch gekennzeichnet, dass** die keine motorisch betriebenen Ventilatoren Teil des Projektionssystems sind.

69. Projektionssystem nach einem der vorstehenden Ansprüche, **dadurch gekennzeichnet, dass** vor dem Reflektor zumindest eine transparente Scheibe und/oder Linse angeordnet ist.

70. Projektionssystem nach dem vorstehenden Anspruch, **dadurch gekennzeichnet, dass** die Scheibe InfrarotLicht reflektiert.

71. Projektionssystem nach einem der vorstehenden Ansprüche, **dadurch gekennzeichnet, dass** der Reflektor und/oder die Halterung durch Konvektion kühlbar sind.
